# EUROPEAN PATENT SPECIFICATION

(11) **EP 2 854 015 B1**
(45) Date of publication and mention of the grant of the patent: **04.09.2019**
(21) Application number: 13306307.3
(22) Date of filing: 25.09.2013
(51) Int. Cl.: G06F 3/06, H04L 12/58

(54) **Communication storage system**
Kommunikationsspeichersystem
Système de stockage de communication

(43) Date of publication of application: 01.04.2015
(73) Proprietor: Alcatel Lucent, 91620 Nozay (FR)
(72) Inventor: Dembek, Adam, 85-776 BYDGOSZCZ (PL)
(74) Representative: Browne, Robin Forsythe

(56) References cited:
- WO-A2-02/082457
- GB-A- 2 491 245
- US-A1- 2008 034 049
- US-A1- 2009 282 191

## Description

### TECHNICAL FIELD

The present invention relates communication systems, and in particular to storage conditions for communication systems.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Telecommunication systems such as email, voice mail or Visual Voice Mail (VVM) systems typically comprise a processor for operation and execution, and a storage module for storing telecommunication data.

The storage is often used as both a transitory cache for storing information as well as for permanent storage of information and data of the telecommunication system.

As such, there is an inherent conflict in this mode of operation. Indeed, messaging systems such as an email or voice mail or VVM systems must provide fast response time and large capacity. Fast access to all stored messages is normally onerous as fast storage modules are much more expensive than slow storage modules, but slower storage modules may compromise performance, particularly for systems with large number of concurrent access (such as serving many different concurrent users).

Patent document GB 2491245 discloses a video mail system with single storage module.

A solution is sought to address this situation, allowing for a better use of storage modules to increase performance while lowering costs of telecommunication systems.

The invention is set out in the appended set of claims. The embodiments and/or examples of the following description which are not covered by the appended claims are considered as not being part of the present invention.

### SUMMARY

In view of the foregoing, an embodiment herein provides for a communication system according to appended claim 1.

An advantage of this embodiment is to provide two types of storage and to distribute stored messages between first and second storages based on usage scenarios. The end user's behavior, for example a cell-phone user's behavior, may be used to determine a point in time when messages ought to be moved from a first storage to a second storage to maximize the cost and operational efficiency constraints.

For instance, in a typical voicemail scenario a user will listen to a new voicemail message and then delete it a short time after. The voicemail message is therefore never kept on servers very long and this situation would not warrant for the message to be moved to slow type of storage. This can limit the number of input/output (I/O) operations for slower storage. Only messages with important information that is saved for future retrieval may be stored in slower storage to decrease the storage costs while minimally impacting day-to-day operational requirements (principally lag in retrieving the information) for large number of I/O operations as is typical on a voicemail server.

Another embodiment provides for a method for storing communication messages according to appended claim 8.

These and other aspects of the embodiments herein will be better appreciated and understood when considered in conjunction with the following description and the accompanying drawings.

### BRIEF DESCRIPTION OF THE FIGURES

Figure 1 illustrates a system adapted for storing messages according to a first embodiment;
Figure 2 and 3 illustrate exemplary use cases of a system according to variants of the embodiment of figure 1.

### DETAILED DESCRIPTION OF EMBODIMENTS

The embodiments herein and the various features and advantageous details thereof are explained more fully with reference to the non-limiting embodiments that are illustrated in the accompanying, drawings and detailed in the following description. Descriptions of well known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the samples should not be construed as limiting the scope of the embodiments herein.

The embodiments herein disclose a system and method of storing information in servers in a cost- and operationally-effective manner. In particular, the embodiment is adapted for use in email server applications, or in voicemail and visual voice mail (VVM) systems.

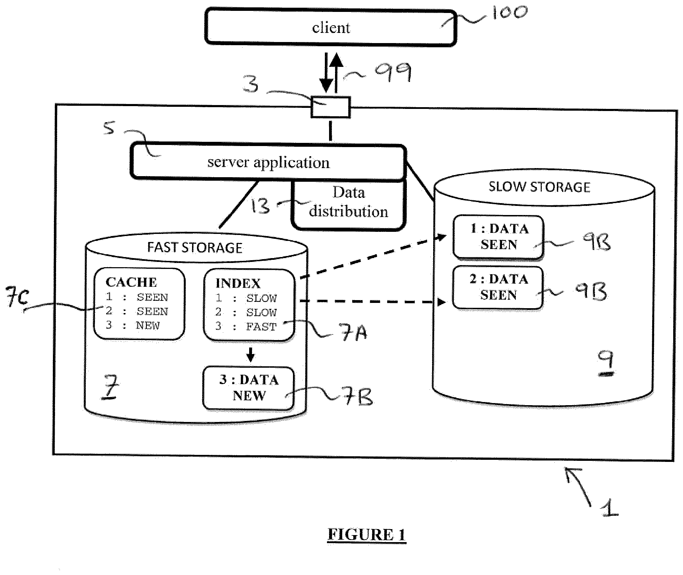

Figure 1 illustrates an exemplary embodiment of a communication system 1 comprising an input/output (I/O) interface device 3 adapted to be in communication with an end user 100 via a network link 99. The communication interface 3 may be wired or
wireless, and may be direct or via an intermediate network such as internet or an enterprise network.

The end user 100, upon variants of the present embodiment, may be a physical person (for example in the case of voicemail) or an intermediate software application present on a user's device.

One user is here illustrated, however many such users may exist and operate in the same manner.

The system 1 and the communication interface 3 are controlled by a server application 5 operating on a processor device. Depending upon the application, the server application 5 may be configured for use as en email server or as a voicemail server.

The system 1 further comprises a first storage device 7, and a second storage device 9. The first storage device 7 is known as a fast storage 7, and the second storage device 9 is known as a slow storage 9. Both fast and slow storages 7, 9 are adapted for storing information thereon.

For the purposes of the present description, fast storage devices 7 are to be understood as low latency storage devices. "Response time" and "low latency" are similar notions and will be used interchangeably.

High latency can cause long pauses during a communication session that impact customer satisfaction, and as such is sought to be minimized for the purposes of everyday operations. The storage module response time is the critical factor for data stored in this storage.

A fast storage 7 may for example be an SSD (Solid State Drive) connected with a SATA (Serial Advance Technology Attachment) interface. More particularly, a fast storage 7 is more generally a storage unit based upon integrated circuit (IC) technology comprising storage elements of the electronic kind that stores data persistently. For example, access time for a typical fast storage 7 is less than 100 microseconds (ie. <100µs).

However, the problem with SSD is the high cost per unit of storage ($ / GB of storage) and the limited number of expandability potential coupled with relatively low storage capacities per storage module.

The slower storage 9 is understood to mean higher response time, higher capacity, and cheaper storage options with commensurate lower performance as compared to fast storage drive 7.

For example, a slow storage 9 could take the form of a Network Attached Storage (NAS) with higher latency but larger capacity and lower cost per unit of storage. Another variant of slow storage 9 is in the form of electromechanical storage disks comprising spinning magnetic disks and read/write heads. For example, access time for a typical slow storage 9 is between 2 and 12 milliseconds (ie. 2 - 12 ms) In other words, fast and slow storage are of the same storage nature, with the fast storage 7 being privileged for high-value, high cost missions, and the slower storage 9 being used for lower value, lower cost missions. The key factor being the relative performance rather than the absolute performance parameters.

The fast storage 7 divides its storage capacity between the different data types :
- an INDEX module 7A,
- data storage elements 7B, and
- a CACHE module 7C.

The INDEX module 7A is adapted to hold information about storage locations of each individual data storage elements 7B. As such, the INDEX module 7A is an index pointing towards physical locations in the fast storage containing the data storage elements 7B. In other words, the INDEX module 7A allows to reference the physical location of all data elements 7B.

It is to be noted that there is only the need for a unique INDEX module 7A across all the fast or slow storages 7, 9. Indeed, data stored on the slow storage 9 in data storage elements 9B will also be referenced by the INDEX module 7A.

The many individual data storage elements 7B each represent a single file or message or piece of content information. For example, each instance of a data storage element 7B represents a message comprising metadata information (information such as "from", "to", "time called", "seen" or "new"etc). Each data storage element 7B, or each "file", may for example be stored in RFC 822 format.

It is to be noted that figure 1 illustrates three distinct messages stored on the system: one message being stored on the fast storage 7, and two messages being stored on the slow storage 9. Each message is referenced with a numerical index number "1", "2", "3" reflecting the numerical index given by the server 5. Furthermore, each data storage element 7B, 9B is illustrated with a part of the metadata apparent, indicating where the voicemail message has been read by the end user 100 (the metadata thus indicating "SEEN"), or is yet to be consulted by the user 100 (the metadata thus indicating "NEW").

The CACHE module 7C comprises a storage area on the fast storage 7 to store the most important information needed for all standard operations. For example, for the case of voicemails or emails, the CACHE module 7C contains the most important header information (ie. Subject, From, To, List of components, IMAP flags) for all messages stored in both fast storage 7 and slow storage 9. The header information is needed for most sessions. The CACHE module 7C does not usually store the body of the message - the body is typically stored in the data storage elements 7B or 9B.

The INDEX module 7A and the CACHE module 7C are controlled by the server application 5. Only the server application 5 is allowed to modify the INDEX module 7A and CACHE module 7C.

The system 1 further comprises a data or message distribution module 13 associated with the server 5. The data distribution module 13 comprises a rule algorithm configured to determine the storage location of data (such as the data storage elements 7B, 9B) between the storage modules available in function of capacities and operational requirements of the system 1.

As a new emails or voicemail messages are deposited in the system 1, the server's data distribution module 13 determines if the message should be stored in fast storage 7 or in slow storage 9. This decision is taken based on received command syntax. The server application 5 adds new information to the INDEX module 7A, CACHE module 7C and store body of the message in chosen data storage elements 7B or 9B.

The data or message distribution module 13 is also responsible for determining the moment when stored messages are marked as SEEN by client or may be too old and should be transferred to slow storage 9 with modification of INDEX module 7A.

It should be noted that the server 5 may be configured to invoke the data or message distribution module 13 periodically or upon a trigger action (such as whenever the user 100 interacts with the server 5).

As such, the data distribution module 13 determines how, when, and under what conditions data storage elements 7B, 9B are moved between storage alternatives, specifically between the fast storage 7 and the slow storage 9.

The message distribution module 13 may have :
- fixed rules,
- fixed rules which may be added, subtracted or modified by an administrator, or
- a further learning algorithm associated therewith in order for rules to be added, subtracted or modified autonomously by the IMAP application 5 in function of constraints programmed into the system 1.

The data distribution module 13 for transferring for example comprises rules such as the following (non limiting):
- messages NOT SEEN by an end user 100 should be stored in fast storage 7 and messages SEEN and ARCHIVED by an end user 100 should be stored in slow storage 9;
- messages having not been consulted by an end user 100 should be stored in fast storage 7 and messages having been consulted by an end user 100 should be stored in slow storage 9;
- messages younger than a predetermined age should be stored in fast storage 7 and messages older than said predetermined age should be stored in slow storage 9;
- A set limit of messages may be set in the fast storage 7, and further messages stored in the slow storage 9, and preferably in increasing order of age such that the young messages are always privileged to be stored in the fast storage 7;
- When the NEW NOT SEEN message is flagged as SEEN by client 100 the message body is moved from fast storage 7 to slow storage 9 and the INDEX file is updated to point for SLOW STORAGE; and/or
- messages for users with a high relative usage activity pattern should be stored in fast storage 7, and messages for users with a low activity profile should be stored in slow storage 9.

In a typical use case for email systems, when the system 1 receives an email message, the IMAP server application 5 receives an IMAP APPEND command with new message in RFC 822 format via the network interface 3.

The IMAP application 5 subsequently reads the INDEX module 7A and the CACHE module 7C on the fast storage 7 to determine where free physical areas on the storage drives 7, 9 may exist to store the newly received message.

Then, the IMAP server application 5 parses the message body received in APPEND command to find important header information (eg, Subject, From, To) and adds them to CACHE information 7C stored in the fast storage 7. The data distribution module 13 decides to store NEW message in fast storage 7 and set the correct location in INDEX data 7A. Then the application 5 writes message body, in the appropriate data storage elements 7B or 9B as determined by the data distribution module 13.

To finish, the server 5 sends an IMAP OK message to client 100 to inform that APPEND command was completed with success.

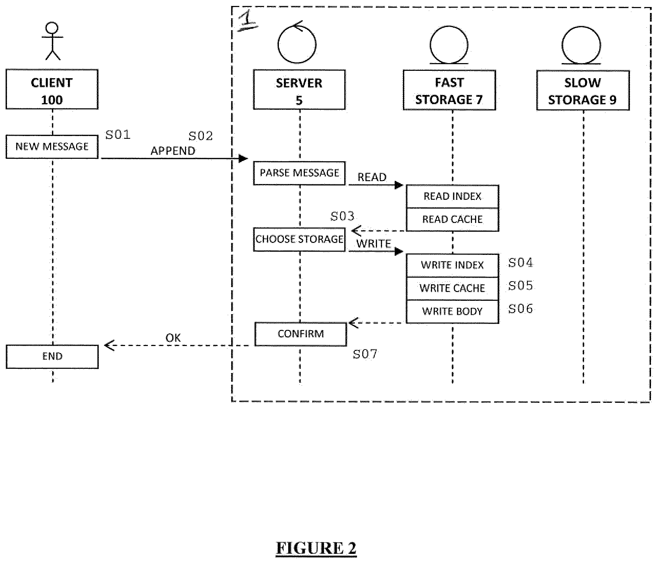

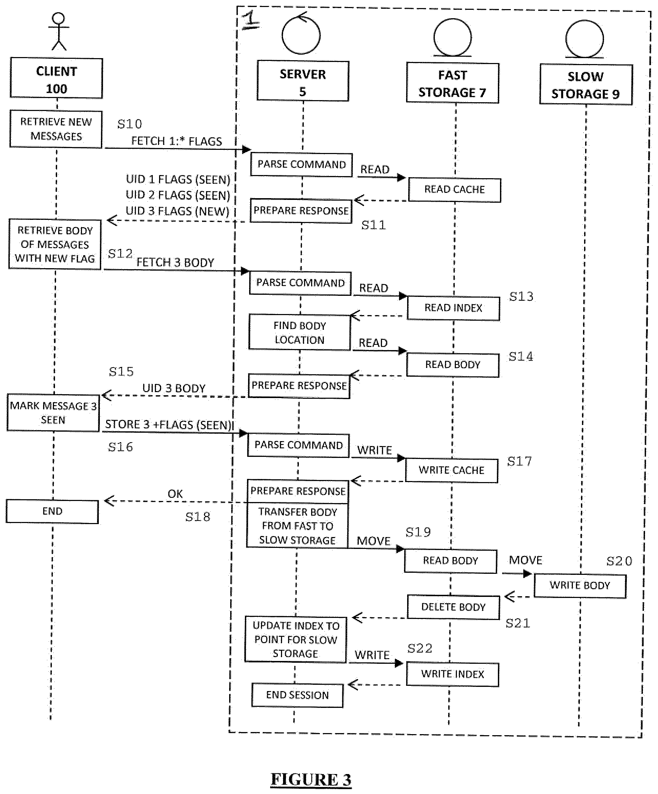

Figures 2 and 3 illustrate exemplary use cases of the system of figure 1 for an IMAP4 email server in communication with the distal email client 100.

The email client 100 may be a mobile device or a fixed device, and may have limited onboard storage or ample onboard storage means.

Furthermore, the email client 100 communicates with the system 1 via the interface port 3 under control of the server application 5.

Turning more specifically to figure 2 illustrates a use case of storing an email message on the system 1.

The client 100 composes a new email message (step S01) via an onboard email composer.

When the email message is completed, the client 100 sends an IMAP "APPEND" command (step S02). The IMAP server 5 parses the command, interrogates the data distribution module 13 to determine if the message should be stored in fast module 7 or in slow storage module 9 (S03) and updates the INDEX module 7A with the new physical message storage location (S04). Then the server 5 stores headers, flags in CACHE module 7C (S05) and body of message in fast storage 7 (S06).

This is particularly advantageous, as the CACHE 7C comprises a copy of most important message headers, flags and message structure. This enables the mail client 100 to send IMAP commands FETCH BODYSTRUCTURE and FETCH FLAGS that needs only information stored in cache 7C. This is sufficient for the user 100 to retrieve a list of available messages with subject and state (NEW or SEEN). This avoids opening large message file (the BODY) to display the list or play the list in telephone session. The file with message body is needed only when client chooses the individual message from the list and decides to open the content.

The system 1 then sends a confirmation message "OK" (S109) to signal that the operation completed successfully.

Figure 3 illustrates another use case for another operation of the system of figure 2, in which the client 100 wishes to retrieve email messages present on the system 1.

When client 100 log in to voicemail IMAP server, the client 100 sends a IMAP4 "FETCH FLAGS" command (S10) to the server 5. The system 1 looks at any unretrieved email messages in its cache storage on the fast storage 7, and returns list of messages with flags (S11). This FETCH 1:* FLAGS command does not need access to body of messages. The client application can determinate ID of all new messages based on FLAGS received from server.

Next, the client 100 might want to download the unretrieved messages to its own local storage. As such, the client 100 sends a IMAP4 "FETCH 3 BODY" command (S12). The system 1 will now look (S13) at the index 7A to determine where the data has been stored, go to that location in the fast storage 7 to read the body of the targeted messages (S14). The system 1 then sends a response with message content to the client (S15).

Once the email has been retrieved, the client 100 may wish to mark the emails as "read", also known as "seen".

As such, the client 100 sends a IMAP4 "STORE 3 +FLAG (SEEN)" command (S16). This command results in the fast storage 7 updating its cache (S17) to signal the message as having been read.

The IMAP server 5 send IMAP OK response to client that message has been marked as "seen" (S18).

Furthermore, the system 1, via IMAP server application 5 and its associated data distribution module 13, determined that an applicable rule is the transfer of messages having been retrieved a first time from the fast storage 7 to the slow storage 9.

As such, the server 5 reads the body of the message (S19), writes the body in the slow storage 9 (S20), deletes the old message still present in the fast storage (S21), then updates the index 7A to point to the new physical storage location (S22).

The email message is now still present on the server, but only in a physical location which is slower to access but is cheaper to maintain, and for no appreciable difference to the performance of the system for the average user in most cases.

Indeed, the IMAP FETCH commands are sent to messaging system 1 only for NEW messages. The IMAP FETCH commands for SEEN messages are very rare. The statistical degradation in the performance is therefore very slight.

It is to be noted that the update of a SEEN flag (S16) may trigger asynchronous move of a message body from a fast storage 7 to a slower storage 9. The process can be delayed if the processor is busy or the fast and/or slow storages 7,9 are busy.

It is to be further noted that the pointer to a message body is always stored on the fast storage 7. The pointer to the message body is stored in the index 7A portion of the fast storage 7.

The above described use cases are of course applicable to other situations and technologies. Indeed, it is particularly advantageous for example for messaging systems such as voice messaging systems or VVM systems where messages can be divided into two states: NEW and SEEN. NEW messages need to be retrieved more quickly, and are likely to be retrieved with more regularity than messages in the SEEN state.

The NEW messages will be stored in fast storage 7 e.g. on internal SSD drive. When the mobile client will retrieve the message the state will change from NEW to SEEN and the message will be moved from fast storage 7 to slower storage 9 or it will be scheduled to be moved to slower storage 9 when server is not used heavily.

In another variant, the data distribution module 13 may trigger the server application 5 to move to slower storage 9 messages that have been in NEW state for defined number of days.

The system 1 can also detect subscriber accounts (e.g. mailboxes) where clients 100 never retrieve their messages and stop using fast storage 9 for such accounts.

The retrieval of SEEN messages will happen only when a mobile client 100 will explicitly request it e.g. due to change of a software version of the mobile client or periodically to sync up.

In yet another variant, the data distribution module 13 can look at the user access profile of the user 100. In particular, certain low profile users may accumulate messages and seldom consult or retrieve his or her messages. As such, the data distribution module 13 can determine that it is operational efficient to store this user's messages in slow storage, freeing up storage capacity for heavy and frequent users of the system to store messages in the fast storage 7.

In particular, the embodiments presented herein are advantageous in particular for a real time system with large capacity, for example one having a large number of user accounts. It allows fast response time for most common operations and large capacity for rarely used messages. The idea should allow decreasing a cost of storage - fast enterprise SSD drives are extremely expensive and usually their cost exceeds couple of times a cost of a server. The fast storage such as SSD drives has higher cost per GB than a large external storage. By combining SSDs with an external storage we can offer much larger capacity and fast access to NEW messages. This solution will be transparent to an external client using protocol like IMAP4.

Having information about the state of a message allows to predict what messages will be retrieved in near future and should be kept in a faster storage until a mobile client application marks them as read. With standard caching solutions we cannot guarantee that the data will stay in a fast storage until a mobile client marks it as read.

If we would use only the fast storage the cost of this solution with the same capacity would be much higher.

If we would use only the slower storage the response time would be much longer and such a system capacity would not be acceptable by a customer.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A communication system (1) adapted for storing communication messages destined for one or more recipients (100), said system comprising a processor (5), a first storage (7), and a second storage (9), wherein said messages are stored in a unique physical location on either the first storage or the second storage, and **characterized in that** the processor is configured to determine on which of said first or second storages to store said messages in function of one or more predetermined characteristics of said messages.

2. A system according to claim 1, wherein the first and second storages are differentiated by their access time parameter.

3. A system according to claim 2, wherein the first storage (7) is based upon integrated circuit technology comprising storage elements of the electronic kind that stores data persistently, and wherein the second storage (9) is based upon electromechanical storage disks comprising spinning magnetic disks and read/write heads.

4. A system according to any one of the preceding claims, where said one or more predetermined characteristics are based on whether the message has been visualized by its recipient.

5. A system according to any one of the preceding claims, where said one or more predetermined characteristics are based on a usage profile of the recipient (100), the usage profile being based on the frequency of access to said system by said recipient in a given time period.

6. A system according to any one of the preceding claims, wherein the system is adapted for storing voicemail messages.

7. A system according to any one of the preceding claims, wherein the system is adapted for storing email messages.

8. Method for storing communication messages destined for one or more recipients (100), in a communication system comprising a first storage (7) and a second storage (9) in a unique physical location, said method comprising:
- receiving messages destined for storage on said system;
said method being **characterized by** the step of:
- storing said messages in either of said first storage or said second storage in function of one or more predetermined characteristics of said messages.

9. Method according to claim 8, further comprising the further step of periodically reviewing all messages stored in both the first storage or the second storage and moving messages to the other of the first storage or the second storage in function of said one or more predetermined characteristics.

## Patentansprüche

1. Kommunikationssystem (1), welches dazu angepasst ist, Kommunikationsnachrichten zu speichern, welche für einen oder mehrere Empfänger (100) bestimmt sind, wobei das System einen Prozessor (5), einen ersten Speicher (7) und einen zweiten Speicher (9) umfasst, wobei die Nachrichten an einem einzigen physischen Ort auf entweder dem ersten Speicher oder dem zweiten Speicher gespeichert werden, und **dadurch gekennzeichnet, dass** der Prozessor dazu angepasst ist zu bestimmen, auf welchem des ersten oder zweiten Speichers die Nachrichten in Abhängigkeit von einem oder mehreren vorbestimmten Eigenschaften der Nachrichten gespeichert werden.

2. System gemäß Anspruch 1, wobei der erste und der zweite Speicher sich in ihrem Zugriffszeitparameter unterscheiden.

3. System gemäß Anspruch 2, wobei der erste Speicher (7) auf integrierter Schaltungstechnologie basiert, die Speicherelemente der elektronischen Art umfasst, die Daten dauerhaft speichern, und wobei der zweite Speicher (9) auf elektromechanischen Speicherscheiben basiert, die sich drehende magnetische Scheiben und Lese-/Schreibköpfe umfassen.

4. System gemäß einem der vorhergehenden Ansprüche, wobei die eine oder die mehreren vorbestimmten Eigenschaften darauf basieren, ob die Nachricht durch ihren Benutzer visualisiert wurde.

5. System gemäß einem der vorhergehenden Ansprüche, wobei die eine oder die mehreren vorbestimmten Eigenschaften auf einem Benutzerprofil des Empfängers (100) basieren, wobei das Benutzerprofil auf der Häufigkeit des Zugriffs auf das System durch den Empfänger in einer bestimmten Zeitperiode basiert.

6. System gemäß einem der vorhergehenden Ansprüche, wobei das System dazu angepasst ist, Sprachnachrichten zu speichern.

7. System gemäß einem der vorhergehenden Ansprüche, wobei das System dazu angepasst ist, E-Mail-Nachrichten zu speichern.

8. Verfahren zum Speichern von Kommunikationsnachrichten, welche für einen oder mehrere Empfänger (100) bestimmt sind, in einem Kommunikationssystem aufweisend einen ersten Speicher (7) und einen zweiten Speicher (9) an einem einzigen physischen Ort, wobei das Verfahren aufweist:
- Empfangen von Nachrichten, welche auf dem System gespeichert werden sollen,
wobei das Verfahren **gekennzeichnet ist durch** den folgenden Schritt:
- Speichern der Nachrichten aus entweder dem ersten Speicher oder dem zweiten Speicher in Abhängigkeit von einer oder mehreren vorbestimmten Eigenschaften der Nachrichten.

9. Verfahren gemäß Anspruch 8, weiterhin umfassend den weiteren Schritt des periodischen Prüfens aller Nachrichten, welche in sowohl dem ersten Speicher oder dem zweiten Speicher gespeichert sind, und Verschieben von Nachrichten auf den jeweils anderen des ersten Speichers oder des zweiten Speichers in Abhängigkeit von der einer oder den mehreren vorbestimmten Eigenschaft(en).

## Revendications

1. Système de communication (1) adapté pour le stockage de messages de communication destinés à un ou plusieurs destinataires (100), ledit système comprenant un processeur (5), un premier stockage (7), et un deuxième stockage (9), selon lequel lesdits messages sont stockés dans un endroit physique unique soit dans le premier stockage, soit dans le deuxième stockage et
**caractérisé en ce que** le processeur est configuré pour déterminer lequel des dits premier ou deuxième stockages est utilisé pour stocker lesdits messages en fonction d'une ou plusieurs caractéristiques prédéterminées des dits messages.

2. Système selon la revendication 1, selon lequel les premier et deuxième stockages sont différenciés par leur paramètre de temps d'accès.

3. Système selon la revendication 2, selon lequel le premier stockage (7) se base sur de la technologie de circuit intégré comprenant des éléments de stockage du type électronique qui stockent des données de manière persistante, et selon lequel le deuxième stockage (9) se base sur des disques de stockage électromécaniques comprenant des disques magnétiques en rotation et des têtes de lecture / d'écriture.

4. Système selon l'une quelconque des revendications précédentes, selon lequel ladite une ou lesdites plusieurs caractéristique(s) prédéterminée(s) se base(nt) sur la visualisation ou non du message par son destinataire.

5. Système selon l'une quelconque des revendications précédentes, selon lequel ladite ou lesdites caractéristique(s) prédéterminée(s) se base(nt) sur un profil d'utilisation du destinataire (100), le profil d'utilisation se basant sur la fréquence d'accès audit système par ledit destinataire dans un intervalle de temps donné.

6. Système selon l'une quelconque des revendications précédentes, selon lequel le système est adapté pour le stockage de messages vocaux.

7. Système selon l'une quelconque des revendications précédentes, selon lequel le système est adapté pour le stockage de messages de courrier électronique.

8. Procédé de stockage de messages de communication destinés à un ou plusieurs destinataires (100), dans un système de communication comprenant un premier stockage (7) et un deuxième stockage (9) dans un endroit physique unique, ledit procédé comprenant:
la réception de messages destinés à être stockés dans ledit système;
ledit procédé étant **caractérisé par** l'étape de stockage desdits messages dans soit le premier stockage, soit le deuxième stockage, en fonction d'une ou plusieurs caractéristiques prédéterminées des dits messages.

9. Procédé selon la revendication 8, comprenant en outre l'étape de vérification périodique de tous les messages stockés dans le premier stockage et dans le deuxième stockage et le déplacement des messages à l'autre stockage parmi le premier stockage ou le deuxième stockage en fonction desdites caractéristiques prédéterminées.
